# EUROPEAN PATENT APPLICATION

(11) **EP 3 992 220 A1**
(43) Date of publication of application: **04.05.2022**
(21) Application number: 20834940.7
(22) Date of filing: 12.05.2020
(51) Int. Cl.: C08G 8/08, C08K 5/02, C08K 5/21, C08L 61/06, C08J 9/14, C08L 71/02

(54) **RESIN COMPOSITION FOR MANUFACTURING PHENOLIC FOAM, AND PHENOLIC FOAM AND METHOD FOR MANUFACTURING SAME**

(30) Priority: 01.07.2019 JP 2019122727
(71) Applicant: Asahi Yukizai Corporation, Nobeoka-shi, Miyazaki 882-8688 (JP)
(72) Inventor: YAMADA, Shuji, Niwa-gun, Aichi 480-0105 (JP); KISAKA, Yasushi, Niwa-gun, Aichi 480-0105 (JP)
(74) Representative: Mewburn Ellis LLP
(86) International application number: PCT/JP2020/018942
(87) International publication number: WO 2021/002097

(57) **Abstract**

To provide a resin composition for manufacturing a phenolic foam, said resin composition enabling the profitable production of a phenolic foam that exerts an excellent heat insulation performance over a medium-to-long term from immediately after the production and, moreover, exhibits a highly excellent compression strength. A resin composition for manufacturing a phenolic foam is prepared by using 1-chloro-2,3,3,3-tetrafluoropropene, which is a foaming agent, as an essential component together with a resol-type phenolic resin and an acid curing agent.

## Description

### TECHNICAL FIELD

The present invention relates to a resin composition for producing phenolic foam. Specifically, the invention relates to a technique for further improving phenolic foam in terms of long-term stability of its heat insulation performance, and its mechanical strength (compressive strength) simultaneously, which phenolic foam is obtained by using a resol-type phenolic resin and an acid curing agent as essential components.

### BACKGROUND ART

Chlorofluorocarbon-based blowing agents have been widely used for producing phenolic resin foam (phenolic foam) by foaming and curing a resol-type phenolic resin in combination with an acid curing agent. However, since chlorofluorocarbon-based blowing agents have problems such as destruction of the ozone layer and a high degree of global warming potential, currently it is recommended to use chlorinated aliphatic hydrocarbon-based blowing agents, hydrocarbon-based blowing agents, halogenated alkenes and the like, as a desirable blowing agent.

For example, Patent Document 1 (JP2016-27175 A) discloses phenolic resin foam that includes a blowing agent containing at least one olefin selected from the group consisting of 1-chloro-3,3,3-trifluoropropene, 1,3,3,3-tetrafluoro-1-propene, 2,3,3,3-tetrafluoro-1-propene and 1,1,1,4,4,4-hexafluoro-2-butene. The olefins including 1-chloro-3,3,3-trifluoropropene disclosed in the above-mentioned document are known to have low degrees of ozone depletion coefficient and global warming potential, and also have flame retardancy.

However, when the olefins including 1-chloro-3,3,3-trifluoropropene disclosed in the Patent Document 1 are used as the blowing agent, phenolic resin foam (phenolic foam) may suffer from the variation of the degree of foaming during its production, between the top and the bottom, and between the center and the ends, of the phenolic foam. As a result, the obtained foam may not exhibit a sufficient degree of compressive strength.

In addition, further improvement of the heat insulation performance has been required of phenolic resin foam (phenolic foam) used in fields such as construction, civil engineering and manufacture of industrial products. For this reason, also blowing agents have been required to contribute to the improvement of the heat insulation performance of phenolic resin foam (phenolic foam).

### PRIOR ART DOCUMENT

### PATENT DOCUMENT

Patent Document 1: JP2016-27175 A

### SUMMARY OF THE INVENTION

### TECHNICAL PROBLEMS

Under these circumstances, the inventors made a thorough research on a resin composition for producing phenolic foam using hydrochlorofluoroolefin, which has low degrees of ozone depletion coefficient and global warming potential, as the blowing agent. As a result, it has been found that 1-chloro-2,3,3,3-tetrafluoropropene used as the blowing agent permits obtaining phenolic foam that exhibits an excellent heat insulation performance from just after its production and over the medium to long term, and achieve an excellent compressive strength. Thus, the present invention was completed.

Therefore, a problem to be solved by the present invention is to provide: a resin composition for advantageously producing phenolic foam exhibiting a remarkable heat insulation performance and superior compressive strength. Another problem to be solved by the invention is to provide phenolic foam exhibiting a remarkable heat insulation performance and superior compressive strength. A further problem to be solved by the invention is to provide a process for advantageously producing such excellent phenolic foam.

### SOLUTION TO PROBLEMS

The gist of the present invention is to provide: a resin composition for producing phenolic foam, comprising a resol-type phenolic resin and an acid curing agent, and further comprising a blowing agent containing 1-chloro-2,3,3,3-tetrafluoropropene, to thereby solve the above-described problems.

In a first preferred embodiment of the resin composition for producing phenolic foam according to the invention, the blowing agent is (Z)-1-chloro-2,3,3,3-tetrafluoropropene.

In a second preferred embodiment of the resin composition for producing phenolic foam according to the invention, the acid curing agent comprises p-toluenesulfonic acid and/or xylenesulfonic acid.

In a third preferred embodiment of the resin composition for producing phenolic foam according to the invention, the acid curing agent comprises p-toluenesulfonic acid and xylenesulfonic acid, a content of the p-toluenesulfonic acid being larger than a content of the xylenesulfonic acid on the mass basis.

In a fourth preferred embodiment of the resin composition for producing phenolic foam according to the invention, the resin composition further comprises an ethylene oxide adduct of castor oil.

In a fifth preferred embodiment of the resin composition for producing phenolic foam according to the invention, the resin composition further comprises urea.

Meanwhile, another gist of the invention is to provide phenolic foam by foaming and curing the resin composition for producing phenolic foam according to any one of the above-mentioned embodiments.

In a first preferred embodiment of the phenolic foam according to the invention, the phenolic foam has a closed cell content of 90% or more.

In a second preferred embodiment of the phenolic foam according to the invention, the phenolic foam has a compressive strength of 17.5 N/cm² or more.

In a third preferred embodiment of the phenolic foam according to the invention, the phenolic foam has an initial thermal conductivity of 0.0170 w/m·k or less.

A further gist of the invention is to provide a process for producing phenolic foam, comprising the step of foaming and curing the resin composition according to any one of the above-mentioned embodiments on a face material.

### ADVANTAGEOUS EFFECTS OF THE INVENTION

As described above, in the resin composition for producing phenolic foam according to the invention, 1-chloro-2,3,3,3-tetrafluoropropene is used as the blowing agent, whereby environmentally friendly phenolic foam having a small impact on the environment can be advantageously formed. The obtained phenolic foam exhibits an excellent heat insulation performance from just after its production and over the medium to long term, and also an excellent compressive strength.

### MODE FOR CARRYING OUT THE INVENTION

Meanwhile, a resol-type phenolic resin used in the present invention is advantageously produced by using an aldehyde in an amount of about 1.0-3.0 mol, and preferably about 1.5-2.5 mol, per 1 mol of a phenol, according to the following method. That is, the aldehyde and the phenol are subjected to reaction under the presence of an alkaline reaction catalyst at a temperature ranging, for example, from 50 °C to the reflux temperature, and the obtained reaction product is subjected to neutralization treatment. Subsequently, the reaction product is dehydrated and condensed under a reduced pressure condition, so as to have specific properties such as a viscosity of 2000 mPa·s or more at 25 °C and a water content of 3-20%, and preferably 5-18%. The reaction product is then cooled. Finally, suitable known additives are added to the reaction product as necessary.

Of course, in addition to the resol-type phenolic resin produced as described above, various known resol-type phenolic resins which are cured by an acid curing agent can be suitably used in the invention. It is also possible to use a resol-type phenolic resin modified by a suitable modifier.

By preparing the resol-type phenolic resin as described above so as to have a viscosity of 2000 mPa·s or more, preferably 2000-100000 mPa·s, more preferably 3000-80000 mPa·s, and further preferably 4000-30000 mPa·s at 25°C, an intended resin composition is further effectively prepared. In particular, the acid curing agent and the blowing agent are allowed to be further effectively contained in a dispersed state, and the stability of the dispersed state can be more advantageously increased, thereby improving the heat insulation performance of the obtained phenolic foam. Where the viscosity of the resol-type phenolic resin is lower than 2000 mPa·s or higher than 100000 mPa·s, the acid curing agent and the blowing agent are difficult to be contained in a desirable dispersed state in the resin composition, and an intended phenolic foam may not be obtained.

Examples of phenols, which are one of the raw materials of the resol-type phenolic resin used in the method according to the invention, include phenol, o-cresol, m-cresol, p-cresol, p-tert-butylphenol, m-xylenol, bisphenol F and bisphenol A. Examples of aldehydes, which are the other of the raw materials and are used in combination with the phenol, include formaldehyde, paraformaldehyde, trioxane, polyoxymethylene and glyoxal. Furthermore, examples of reaction catalysts include potassium hydroxide, sodium hydroxide, barium hydroxide, calcium hydroxide, potassium carbonate and ammonia. Of course, the phenol, the aldehyde and the reaction catalyst are by no means limited to those described above, and any one or any combination of known phenols, aldehydes and reaction catalysts are suitably used.

The acid curing agent used in the invention is a curing catalyst, that is, a component for promoting curing reaction of the above-mentioned resol-type phenolic resin, and any conventional acid curing agent may be suitably selected and used. Examples of acid curing agents include: aromatic sulfonic acids such as benzenesulfonic acid, phenolsulfonic acid, cresolsulfonic acid, toluenesulfonic acid, xylenesulfonic acid and naphthalenesulfonic acid; aliphatic sulfonic acids such as methanesulfonic acid and trifluoromethanesulfonic acid; and inorganic acids such as sulfuric acid, phosphoric acid, polyphosphoric acid and fluoboric acid. Any one or any combination of these acid curing agents may be used. Among these acid curing agents, phenolsulfonic acid, toluenesulfonic acid, xylenesulfonic acid and naphthalenesulfonic acid are particularly preferably used. They permit a desirable curing rate in the production of phenolic foam, whereby a further improved balance between the curing and the foaming by the blowing agent is permitted in the resol-type phenolic resin, to thereby achieve a desirable foam structure of the phenolic foam. In the present invention, it is particularly recommended to use paratoluenesulfonic acid and xylenesulfonic acid together. The amount of paratoluenesulfonic acid is preferably more than that of xylenesulfonic acid on the mass basis. Specifically described, it is advantageous to set the ratio by mass of the paratoluenesulfonic acid to the xylenesulfonic acid between 51:49 and 95:5.

The amount of use of the acid curing agent is suitably determined depending on its kind and conditions including a temperature at the time of mixing with the above-mentioned resol-type phenolic resin. In the invention, it is preferable to use the acid curing agent in an amount of 1-50 parts by mass, preferably 5-30 parts by mass, and particularly preferably 7-25 parts by mass, per 100 parts by mass of the resol-type phenolic resin. When the amount of the acid curing agent is less than 1 part by mass, the curing does not proceed at a suitable rate. On the other hand, when its amount is more than 50 parts by mass, the curing rate becomes excessively high, and the intended phenolic foam cannot be obtained.

In the invention, along with the above-mentioned resol-type phenolic resin and acid curing agent, 1-chloro-2,3,3,3-tetrafluoropropene (HCFO-1224yd) is used as the blowing agent, so as to form the resin composition for producing phenolic foam.

1-chloro-2,3,3,3-tetrafluoropropene (HCFO-1224yd) used as the blowing agent in the invention has low degrees of ozone depletion coefficient and global warming potential. As a result, the phenolic foam obtained by the resin composition according to the invention is environmentally friendly and has a small impact on the environment. The inventors also found that the obtained phenolic foam exhibits an excellent heat insulation performance from just after its production and over the medium to long term, and also an excellent compressive strength.

1-chloro-2,3,3,3-tetrafluoropropene (HCFO-1224yd) is known to have the cis-form (Z-form) and the trans-form (E-form). Since the cis-form (Z-form) is more stable than the trans-form (E-form), the cis-form of 1-chloro-2,3,3,3-tetrafluoropropene, that is, (Z)-1-chloro-2,3,3,3-tetrafluoropropene is used in an advantageous embodiment.

It is acceptable to use other blowing agents together with the above-mentioned 1-chloro-2,3,3,3-tetrafluoropropene, as long as such blowing agents do not hinder the object of the invention. Examples of blowing agents that can be used together with 1-chloro-2,3,3,3-tetrafluoropropene include chlorinated aliphatic hydrocarbons, aliphatic hydrocarbons and halogenated alkenes, which have a low degree of global warming potential.

The chlorinated aliphatic hydrocarbon as the blowing agent is preferably a chlorinated product of a linear- or branched-chain aliphatic hydrocarbon having typically about 2-5 carbon atoms, the number of bonded chlorine atoms being 1-4 in general. Specific examples of such chlorinated aliphatic hydrocarbons include dichloroethane, propylchloride, isopropylchloride, butylchloride, isobutylchloride, pentylchloride and isopentylchloride. Any one or any combination of these chlorinated aliphatic hydrocarbons can be used, but chloropropanes such as propylchloride and isopropylchloride are preferred among them, and isopropylchloride is particularly preferably used.

The aliphatic hydrocarbon as the blowing agent is suitably selected from conventional hydrocarbon-based blowing agents having about 3-7 carbon atoms, and examples of aliphatic hydrocarbons include propane, butane, pentane, isopentane, hexane, isohexane, neohexane, heptane, isoheptane and cyclopentane. Any one or any combination of these aliphatic hydrocarbons can be used.

Where the above-mentioned chlorinated aliphatic hydrocarbon and aliphatic hydrocarbon are used together with 1-chloro-2,3,3,3-tetrafluoropropene, the mixture ratio of the aliphatic hydrocarbon to the chlorinated aliphatic hydrocarbon on the mass basis is preferably in the range between 25:75 and 5:95. A preferred combination of two kinds of blowing agents is the combination of isopentane and isopropylchloride.

In the invention, examples of blowing agents used along with 1-chloro-2,3,3,3-tetrafluoropropene include halogenated alkenes. The halogenated alkene contributes to a further improvement of the properties, in particular the flame resistance, of the obtained phenolic foam. The halogenated alkene with the above-mentioned characteristic also includes so-called halogenated olefins and halogenated hydroolefins, and is typically formed by bonding chlorine or fluorine as a halogen to an unsaturated hydrocarbon derivative with 2-6 carbon atoms, for example propene, butene, pentene and hexene. These unsaturated hydrocarbon derivatives have 3-6 fluorine substituents, and can also contain other substituents, for example chlorine. Examples of such halogenated alkenes include tetrafluoropropene, fluorochloropropene, trifluoromonochloropropene, pentafluoropropene, fluorochlorobutene, hexafluorobutene and mixtures thereof.

Specific examples of hydrofluoroolefins (HFO) which are one of the halogenated alkenes (halogenated olefins) include pentafluoropropene such as 1, 2, 3, 3, 3-pentafluoropropene (HFO-1225ye), tetrafluoropropene such as 1, 3, 3, 3-tetrafluoropropene (HFO-1234ze), 2, 3, 3, 3-tetrafluoropropene (HFO-1234yf) and 1, 2, 3, 3-tetrafluoropropene (HFO-1234ye), trifluoropropene such as 3, 3, 3-trifluoropropene (HFO-1243zf), isomers of tetrafluorobutene (HFO-1354), isomers of pentafluorobutene (HFO-1345), isomers of hexafluorobutene (HFO-1336) such as 1, 1, 1, 4, 4, 4-hexafluoro-2-butene (HFO-1336mzz), isomers of heptafluorobutene (HFO-1327), isomers of heptafluoropentene (HFO-1447), isomers of octafluoropentene (HFO-1438) and isomers of nonafluoropentene (HFO-1429). In addition, examples of hydrochlorofluoroolefines (HCFO) include 1-chloro-3, 3, 3-trifluoropropene (HCFO-1233zd), 2-chloro-3, 3, 3-trifluoropropene (HCFO-1233xf), dichlorotrifluoropropene (HCFO-1223), 1-chloro-2, 3, 3-trifluoropropene (HCFO-1233yd), 1-chloro-1, 3, 3-trifluoropropene (HCFO-1233zb), 2-chloro-1, 3, 3-trifluoropropene (HCFO-1233xe), 2-chloro-2, 2, 3-trifluoropropene (HCFO-1233xc), 3-chloro-1, 2, 3-trifluoropropene (HCFO-1233ye) and 3-chloro-1, 1, 2-trifluoropropene (HCFO-1233yc).

Furthermore, in some embodiments, the blowing agent may also contain fluorinated hydrocarbons (chlorofluorocarbon substitutes) such as 1, 1, 1, 3, 3-pentafluorobutane, fluorinated chlorine hydrocarbons such as trichloromonofluoromethane and trichlorotrifluoroethane, water, ether compounds such as isopropyl ether, gases such as nitrogen, argon and carbon dioxide, and air.

In the invention, the blowing agent including at least 1-chloro-2,3,3,3-tetrafluoropropene is used in a total amount of typically 1-30 parts by mass, and preferably 5-25 parts by mass, per 100 parts by mass of the resol-type phenolic resin. Where 1-chloro-2,3,3,3-tetrafluoropropene (HCFO-1224yd) and other blowing agents are used together, the ratio of HCFO-1224yd to other blowing agents is advantageously determined in the range between 1:0.1 and 1:2, preferably between 1:0.1 and 1:1, and more preferably between 1:0.2 and 1:0.7.

As described above, the resin composition for producing phenolic foam according to the invention indispensably contains, together with the above-mentioned resol-type phenolic resin and the acid curing agent, the blowing agent including 1-chloro-2,3,3,3-tetrafluoropropene as an essential component. In addition, the resin composition may contain known foam stabilizers, urea, red phosphorus powder, inorganic fillers and plasticizers as necessary.

Among the above-mentioned additives contained as necessary, the foam stabilizer is used for supporting mixture and emulsification of the mixed components in the resin composition, dispersing generated gas and stabilizing membranes of foam cells, for example. The kind of the foam stabilizer is not limited, and any foam stabilizer known in this technical field can be selected and used. Particularly preferably used are nonionic surfactants such as polysiloxane-based compounds, polyoxyethylenesorbitan fatty acid ester, ethylene oxide (EO) adducts of alkylphenol and EO adducts of castor oil.

Specifically described, the EO adduct of castor oil advantageously used in the invention has a molar amount of the added EO in the range of more than 20 and less than 40 per 1 molar of castor oil. This range is preferred because it allows hydrophobic groups contained in the castor oil, consisting mainly of long-chain hydrocarbon groups, and hydrophilic groups formed by ethylene oxide, consisting mainly of polyoxyethylene groups, to be arranged in a molecule in good balance, thereby permitting good surface activity of the EO adduct of castor oil. Using the EO adduct of castor oil with good surface activity allows for advantages of keeping the cell diameter of phenolic foam small, and giving flexibility to cell walls of phenolic foam, thereby advantageously reducing the generation of crack on the cell walls. The molar amount of the added EO is further preferably in the range from 21 to 38.

Any one or any combination of the above-mentioned foam stabilizers may be used in an amount not being limited, but typically ranging from 0.5 to 10 parts by mass per 100 parts by mass of the resol-type phenolic resin.

Furthermore, the resin composition for producing phenolic foam obtained according to the invention preferably contains urea. Urea permits reducing the initial thermal conductivity of phenolic foam to be obtained, reducing odor of phenolic foam, and achieving a high degree of strength, in particular a low degree of brittleness, of phenolic foam. Furthermore, urea advantageously contributes to keeping the thermal conductivity of phenolic foam low over the medium to long term. As a result, phenolic foam exhibiting excellent heat insulation performance with long-term stability can be easily obtained.

The resin composition for producing phenolic foam according to the invention contains red phosphorus powder for the purpose of giving excellent flame resistance to phenolic foam obtained from the resin composition, reducing or preventing increase of the thermal conductivity of the phenolic foam, and maintaining its low thermal conductivity over the medium to long term. Any conventional red phosphorus powder may be used, usually by selecting from those commercially available. Examples of commercially available red phosphorus powder include products sold in the name of "NOVARED" and "NOVAEXCEL" manufactured by Rin Kagaku Kogyo Co., Ltd., "HISHIGUARD" manufactured by Nippon Chemical Industry Co., Ltd. and "EXOLIT" manufactured by Clariant AG. The above-mentioned red phosphorus powder preferably has a coating layer on its surface, so as to improve its handling ease and processability, and to enhance its dispersibility into the resin composition and advantageously improve the effect of its addition. Specifically described, it is advantageous to use red phosphorus powder consisting of particles having a coating layer on their surface, which coating layer is formed of an inorganic compound such as metal oxides and metal hydroxides including aluminum hydroxide, magnesium hydroxide, zinc hydroxide, titanium hydroxide, aluminum oxide, magnesium oxide, zinc oxide and titanium oxide, and/or a thermosetting resin such as phenolic resin, furan resin and xylene-formaldehyde resin. The coating layer is generally formed in an amount of 1-30 parts by mass per 100 parts by mass of the red phosphorus powder.

The amount of use of the red phosphorus powder is determined within the range of typically 0.5-30 parts by mass, preferably 1-25 parts by mass, and further preferably 2-20 parts by mass, per 100 parts by mass of the resol-type phenolic resin. Where the added amount of the red phosphorus powder is too small, its effect to give the flame resistance to phenolic foam is not sufficiently exhibited. On the other hand, an excessively large amount of red phosphorus powder results in a higher thermal conductivity of phenolic foam on the contrary, increases the viscosity of the composition to which the red phosphorus powder has been added thereby causing problems such as stirring deficiency, and makes it difficult to maintain a low thermal conductivity over the medium to long term.

In addition, the red phosphorus powder in the invention typically has an average particle diameter of 1-100 µm, and preferably 5-50 µm. The red phosphorus powder with an undesirably small particle diameter is difficult to handle and is not likely to achieve uniform dispersion into the resin composition, for example. In contrast, the red phosphorus powder with an excessively large particle diameter tends not to be uniformly dispersed in the resin composition.

Furthermore, examples of inorganic fillers include metal hydroxides and metal oxides such as aluminum hydroxide, magnesium hydroxide, calcium hydroxide, magnesium oxide, aluminum oxide and zinc oxide; powders of metals such as zinc; and metal carbonates such as calcium carbonate, magnesium carbonate, barium carbonate and zinc carbonate. Any one or any combination of these inorganic fillers can be used. The inorganic filler permits improvement of the flame resistance or fireproofness of phenolic foam. Needless to say, the amount of use of the inorganic filler is suitably determined within the range not hindering the purpose of the invention.

The plasticizer is advantageously used for giving flexibility to cell walls of phenolic foam and reducing deterioration of its heat insulation performance over time. The kind of the plasticizer is not limited, and any known plasticizer which has been used for producing phenolic foam can be used. For example, triphenyl phosphate, dimethyl terephthalate and dimethyl isophthalate may be used, and polyesterpolyol can be effectively used, too. In particular, polyesterpolyol has good compatibility with a hydrophilic phenolic resin solution, and can be uniformly mixed with the phenolic resin, since polyesterpolyol has a structure including an ester bond and a hydroxyl group, which are hydrophilic and excellent in surface activity. Furthermore, polyesterpolyol is a preferable plasticizer also in that it prevents uneven distribution of cells. That is, polyesterpolyol allows the cells to be distributed evenly over the entirety of the foam, thereby permitting easy formation of phenolic resin foam (phenolic foam) having a uniform quality. The plasticizer is used generally in an amount of 0.1-20 parts by mass, preferably 0.5-15 parts by mass, and more preferably 1-12 parts by mass, per 100 parts by mass of the resol-type phenolic resin, whereby the effect of giving flexibility to the cell walls of the obtained phenolic foam is advantageously exhibited without deteriorating other properties of the phenolic foam. Thus, the purpose of the invention is further advantageously achieved.

The resin composition for producing phenolic foam containing the above-mentioned components according to the invention can be prepared as follows, for example. First, the above-mentioned foam stabilizer, urea, inorganic filler, plasticizer and other components are added to and mixed with the resol-type phenolic resin described above as necessary, to thereby obtain a mixture to which 1-chloro-2,3,3,3-tetrafluoropropene (HCFO-1224yd) is added as the blowing agent. The mixture including the blowing agent is then charged into a mixer together with the acid curing agent, and stirred, whereby the resin composition is prepared.

For producing the intended phenolic foam by using the thus prepared resin composition, various known methods can be employed. Examples of forming methods include: (1) a method in which the resin composition is cast on a continuous conveyor belt, and foamed and cured; (2) a method in which the resin composition is partially cast, foamed and cured; (3) a method in which the resin composition is filled in a mold, and foamed and cured under pressure in the mold; (4) a method in which the resin composition is charged into a certain large space, and foamed and cured to form a foamed block; and (5) a method in which the resin composition is foamed within a hollow space while being introduced into the hollow space under pressure.

The above-mentioned forming method (1) as one of the forming methods includes the steps of ejecting the resin composition for producing phenolic foam on a continuously movable carrier, and passing the ejected resin composition through a heating zone to foam and form the ejected resin composition, whereby desired phenolic foam is produced. More specifically described, in the forming method (1), the above-mentioned resin composition for producing phenolic foam is ejected onto a face material on a conveyor belt, and another face material is placed on the upper surface of the ejected resin material on the conveyor belt. Then, the resin material is introduced into a curing furnace. In the curing furnace, the resin material is pressed with another conveyor belt to be adjusted to a predetermined thickness, and the resin material is foamed and cured at about 60-100°C for about 2-15 minutes. The foam taken out of the curing furnace is cut into a predetermined length, whereby a phenolic foam having a desired shape is produced.

The kind of the face material used in the invention is not limited, and is typically selected from nonwoven fabrics of natural fiber, synthetic fiber such as polyester fiber and polyethylene fiber, inorganic fiber such as glass fiber; paper; aluminum-foil-clad nonwoven fabrics; metal plates and metal foils. Preferred face materials are nonwoven glass fabrics, spunbonded nonwoven fabrics, aluminum-foil-clad nonwoven fabrics, metal plates, metal foils, plywood, structural panels, particle boards, hardboards, wood cement boards, flexible plates, perlite plates, calcium silicate plates, magnesium carbonate plates, pulp cement boards, sheathing boards, medium density fiber boards, plaster boards, lath sheets, volcanic vitreous composite plates, natural stone, bricks, tiles, shaped materials of glass, shaped materials of light-weight cellular concrete, shaped materials of cement mortar, and shaped materials using water-curable cement hydrates as a binder component such as shaped materials of glass-fiber-reinforced cement. The face material may be provided on one surface of the phenolic foam, or on respective opposite surfaces of the phenolic foam. When the face materials are provided on the respective opposite surfaces of the foam, the face materials may be the same or different from each other. Further, the face material(s) may be later bonded to the surface(s) with an adhesive.

The thus obtained phenolic foam has a closed cell content of preferably 90% or more, further preferably 92% or more, particularly preferably 93% or more, and 100% or less. In the phenolic foam with an excessively low closed cell content, the thermal conductivity may increase after the long time has passed, since the blowing agent included in the cell is easily substituted with the air. In addition, the compressive strength of such phenolic foam tends to be deteriorated, since the cell membrane is easily broken.

The thus obtained phenolic foam has an initial thermal conductivity of generally 0.0170 W/m·K or less at 20°C, and preferably 0.0165 W/m·K or less at 20°C. Furthermore, the phenolic foam has a thermal conductivity of typically 0.0180 W/m·K or less at 20°C, and preferably 0.0170 W/m·K or less at 20°C in an accelerated test for examining the long-term stability of the thermal conductivity. Thus, the phenolic foam advantageously exhibits an excellent heat insulation performance from just after its production and over the medium to long term.

In the phenolic foam according to the invention, the compressive strength is preferably 17.5 N/cm² or more, and further preferably 18.0 N/cm².

In addition, in the phenolic foam according to the invention, the average cell diameter is preferably 50-200 µm, more preferably 50-150 µm, further preferably 60-140 µm, and particularly preferably 70-120 µm. An excessively large average cell diameter tends to result in deterioration of the initial thermal conductivity due to the reduced convection of the gas in the cells and heat insulation by the cell membranes. On the other hand, an excessively small average cell diameter tends to result in deterioration of the compressive strength, because each cell membrane is thin where the average cell diameter is too small.

Furthermore, the phenolic foam obtained according to the invention has a density in the range of 10 kg/m³-150 kg/m³, preferably 15 kg/m³-100 kg/m³, more preferably 15 kg/m³-70 kg/m³, further preferably 20 kg/m³-50 kg/m³, and the most preferably 20 kg/m³-40 kg/m³. The phenolic foam having a density lower than 10 kg/m³ suffers from a low degree of strength, and the foam (foam product) may be broken at the time of delivery and construction. In addition, where the phenolic foam has a low density, cell membranes in the foam (foam product) tend to be thin. In the case where the cell membrane is thin, the blowing agent in the foam is easily substituted with the air. Furthermore, the thin cell membrane is likely to break while being foamed, whereby a good closed cell structure cannot be obtained in the resultant phenolic foam. Thus, the long-term heat insulation performance of the phenolic foam with a low density tends to decline. On the other hand, when the density of the phenolic foam exceeds 150 kg/m³, the heat conductivity of solids derived from solid components including the phenolic resin becomes undesirably high, and the heat insulation performance of the phenolic foam tends to decline.

### EXAMPLES

To clarify the present invention more specifically, some examples of the present invention will be described. However, it is to be understood that the present invention is by no means limited by the details of the illustrated examples. It is to be understood that the present invention may be embodied with various changes, modifications and improvements other than those described in the following examples and the preceding detailed description, on the basis of the knowledge of those skilled in the art, without departing from the spirit and scope of this invention. In the examples and comparative examples described below, "%" and "part" respectively indicate "% by mass" and "part by mass", unless otherwise specified.

### - Example 1 -

1600 parts of phenol, 2282 parts of 47% formalin and 41.6 parts of a 50% aqueous solution of sodium hydroxide were charged in a three-necked flask equipped with a reflux condenser, a thermometer and a stirrer, and a reaction was carried out at 80°C for 70 minutes. The reaction mixture was cooled to 40°C, neutralized with a 50% aqueous solution of p-toluenesulfonic acid, and dehydrated and condensed to have a moisture content of 10% under heat and at a reduced pressure, whereby a liquid resol-type phenolic resin was obtained. The obtained liquid resol-type phenolic resin had a viscosity of 10000 mPa·s at 25°C, a number average molecular weight of 380 and a free phenol content of 4.0%.

Then, to 100 parts of the thus obtained liquid resol-type phenolic resin, there were added 3 parts of an EO adduct of castor oil (molar amount of the added EO was 22) as a foam stabilizer. The liquid resol-type phenolic resin and the foam stabilizer were mixed with each other, whereby a uniform phenolic resin mixture was obtained.

Subsequently, to 103 parts of the thus obtained phenolic resin mixture, a blowing agent and a curing agent were added, the blowing agent being 17 parts of (Z)-1-chloro-2,3,3,3-tetrafluoropropene (HCFO-1224yd; available from AGC Inc., Japan), and the curing agent being 15 parts of a mixture consisting of p-toluenesulfonic acid and xylenesulfonic acid in a ratio by mass of 2:1. The phenolic resin mixture, the blowing agent and the curing agent were mixed with each other by stirring, whereby a foamable phenolic resin forming material, which is a phenolic resin composition for producing phenolic foam, was prepared.

The obtained foamable phenolic resin forming material was filled in a formwork which had a width of 300 mm, a length of 300 mm and a thickness of 50 mm, and which had been preheated to a temperature of 70-75°C. The forming material filled in the formwork was placed in an oven at 70-75°C and held in the oven for 10 minutes for foaming and curing, and further heated in a heating furnace at a temperature of 70°C for 12 hours for postcure. Thus, a phenolic foam (phenolic resin foam) was produced.

### - Example 2 -

A phenolic foam was produced in the same manner as in the Example 1, except that a mixture consisting of p-toluenesulfonic acid and xylenesulfonic acid in a ratio by mass of 1:1 was used as the acid curing agent.

### - Example 3 -

A phenolic foam was produced in the same manner as in the Example 1, except that 15 parts of xylenesulfonic acid was used as the acid curing agent.

### - Example 4 -

A phenolic foam was produced in the same manner as in the Example 1, except that the blowing agent (HCFO-1224yd) was used in an amount of 15 parts.

### - Example 5 -

A phenolic foam was produced in the same manner as in the Example 1, except that 14 parts of HCFO-1224yd and 3 parts of 1-chloro-3,3,3-trifluoropropane (HCFO-1233zd; available from Honeywell International Inc., U.S.A.) were used together as the blowing agent.

### - Example 6 -

A phenolic foam was produced in the same manner as in the Example 1, except that 11 parts of HCFO-1224yd and 6 parts of HCFO-1233zd were used together as the blowing agent.

### - Example 7 -

A phenolic foam was produced in the same manner as in the Example 1, except that 13 parts of HCFO-1224yd and 4 parts of 1,1,1,4,4,4-hexafluoro-2-butene (HFO-1336mzz; available from The Chemours Company, U.S.A.) were used together as the blowing agent.

### - Example 8 -

A phenolic foam was produced in the same manner as in the Example 1, except that 5 parts of urea was added to the phenolic resin mixture as an additive.

### - Comparative Example 1 -

A phenolic foam was produced in the same manner as in the Example 1, except that 15 parts of 1-chloro-3,3,3-trifluoropropene (HCFO-1233zd) was used as the blowing agent in place of 17 parts of (Z)-1-chloro-2,3,3,3-tetrafluoropropene (HCFO-1224yd).

### - Comparative Example 2 -

A phenolic foam was produced in the same manner as in the Example 1, except that 19 parts of 1,1,1,4,4,4-hexafluoro-2-butene (HFO-1336mzz) was used as the blowing agent in place of 17 parts of (Z)-1-chloro-2,3,3,3-tetrafluoropropene (HCFO-1224yd).

With respect to each of the thus obtained phenolic foams (phenolic resin foams), the density, the closed cell content, the average cell diameter, the initial thermal conductivity, the long-term stability of the thermal conductivity and the compressive strength were measured or evaluated according to the following methods. The results are indicated in the following Table 1.

### (1) Measurement of the density

The density of each phenolic foam was measured according to JIS A 9511:2017, "6.6 Density".

### (2) Measurement of the closed cell content

The closed cell content of the sample of the phenolic foam was measured according to ASTM D2856.

### (3) The average cell diameter

A sample of the phenolic foam was cut out from the central portion in the thickness direction of the phenolic foam, and the cross section in the thickness direction of the sample was photographed at 50-times magnification. Four lines of 9 cm long were drawn on the photographed image, avoiding voids (spaces as large as 2 mm² or more). A number of cells on each of the lines was counted based on the measuring method of a cell number defined in JIS K 6400 (2004), and the average value was calculated for the measured numbers. The average cell diameter (µm) was obtained by dividing 1800 µm by the average number of cells.

### (4) Measurement of the initial thermal conductivity at 20 °C

A sample of the phenolic foam cut into 200 mm x 200 mm square with a thickness of 50 mm was provided. Then, the thermal conductivity of the sample was measured with a thermal conductivity tester HC-074 304 (available from Eko Instruments Co., Ltd.) according to the Heat flow meter method specified in JIS A 1412-2:1999, with a low temperature plate being set at 10 °C, and a high temperature plate being set at 30 °C. Here, the thermal conductivity of the sample after it was left in a 70 °C atmosphere for 4 days was defined as its initial thermal conductivity at 20 °C.

### (5) Evaluation of the long-term stability of the thermal conductivity

An accelerated test for evaluating the long-term stability of the thermal conductivity was performed according to the method defined in ISO 11561 Annex B. In the accelerated test, the highest temperature that can be reached in an architectural structure was supposed to be 70 °C, and therefore the sample of the phenolic foam was measured of its thermal conductivity after being left in a 70 °C atmosphere for 25 weeks. The long-term stability of the thermal conductivity was evaluated based on the thermal conductivity of the sample obtained in the accelerated test. In the following Table 1, the thermal conductivity of the sample after the accelerated test was defined as "thermal conductivity at 20 °C after the accelerated test".

### (6) Measurement of the compressive strength

The compressive strength of the sample of the phenolic foam was measured according to the "6.9 Compressive strength" of JIS A 9511:2017.

**Table 1**

| | Density (kg/m³) | Closed cell content (%) | Average cell diameter (µm) | Initial thermal conductivity [20 °C] (W/m·k) | Thermal conductivity after accelerated test [20 °C] (W/m·k) | Compressive strength (N/cm²) |
|---|---|---|---|---|---|---|
| Example 1 | 30 | 94.8 | 106 | 0.0151 | 0.0158 | 19.4 |
| Example 2 | 30 | 94.4 | 105 | 0.0151 | 0.0158 | 19.1 |
| Example 3 | 30 | 93.8 | 103 | 0.0152 | 0.0159 | 18.0 |
| Example 4 | 35 | 93.2 | 101 | 0.0153 | 0.0161 | 18.1 |
| Example 5 | 30 | 94.1 | 105 | 0.0156 | 0.0163 | 19.1 |
| Example 6 | 30 | 93.3 | 104 | 0.0161 | 0.0170 | 18.3 |
| Example 7 | 30 | 94.4 | 107 | 0.0157 | 0.0164 | 18.1 |
| Example 8 | 30 | 94.8 | 106 | 0.0151 | 0.0158 | 19.5 |
| Comparative Example 1 | 30 | 94.9 | 103 | 0.0171 | 0.0183 | 16.8 |
| Comparative Example 2 | 30 | 93.9 | 109 | 0.0172 | 0.0181 | 17.0 |

As is apparent from the results shown in Table 1, all of the phenolic foams obtained in the Examples 1-8 had an initial thermal conductivity of 0.0170 W/m·K or less, and a thermal conductivity of 0.0180 W/m·K or less even after the accelerated test for evaluating the long-term stability of the thermal conductivity. Thus, it was recognized that the phenolic foams obtained in the Examples 1-8 were remarkably excellent in their initial thermal conductivities, and could maintain such excellent thermal conductivities, with the increase rate of the thermal conductivities being kept low over the medium to long term. Besides, the phenolic foams obtained in the Examples 1-8 had a closed cell content of 90% or more and a compressive strength of 17.5 N/cm² or more. It means that these phenolic foams exhibited excellent compressive strengths.

In contrast, the phenolic foams obtained in the Comparative Examples 1 and 2 that did not contain the specific blowing agent (HCFO-1224yd) had a higher degree of initial thermal conductivity and thermal conductivity after the accelerated test, that is, a lower degree of heat insulation performance, than the phenolic foams obtained in the Examples 1-8. The phenolic foams obtained in the Comparative Examples 1 and 2 also had a compressive strength of 17.0 N/cm² or less, which is inferior to the compressive strength of each of the phenolic foams obtained in the Examples 1-8.

## Claims

1. A resin composition for producing phenolic foam,
comprising a resol-type phenolic resin and an acid curing agent, and
further comprising a blowing agent containing 1-chloro-2,3,3,3-tetrafluoropropene.

2. The resin composition for producing phenolic foam according to claim 1, wherein the blowing agent is (Z)-1-chloro-2,3,3,3-tetrafluoropropene.

3. The resin composition for producing phenolic foam according to claim 1 or 2, wherein the acid curing agent comprises p-toluenesulfonic acid and/or xylenesulfonic acid.

4. The resin composition for producing phenolic foam according to claim 1 or 2, wherein the acid curing agent comprises p-toluenesulfonic acid and xylenesulfonic acid, a content of the p-toluenesulfonic acid being larger than a content of the xylenesulfonic acid on the mass basis.

5. The resin composition for producing phenolic foam according to any one of claims 1 to 4, further comprising an ethylene oxide adduct of castor oil.

6. The resin composition for producing phenolic foam according to any one of claims 1 to 5, further comprising urea.

7. Phenolic foam obtained by foaming and curing the resin composition according to any one of claims 1 to 6.

8. The phenolic foam according to claim 7, having a closed cell content of 90% or more.

9. The phenolic foam according to claim 7 or 8, having a compressive strength of 17.5 N/cm² or more.

10. The phenolic foam according to any one of claims 7 to 9, having an initial thermal conductivity of 0.0170 w/m·k or less.

11. A process for producing phenolic foam, comprising the step of foaming and curing the resin composition according to any one of claims 1 to 6 on a face material.
